# EUROPÄISCHE PATENTSCHRIFT

(11) **EP 2 851 875 B1**
(45) Veröffentlichungstag und Bekanntmachung des Hinweises auf die Patenterteilung: **08.12.2021**
(21) Anmeldenummer: 13185215.4
(22) Anmeldetag: 19.09.2013
(51) Int. Cl.: G06Q 20/18, G07F 7/06

(54) **Rückgabeautomat für Leergut**
Return machine for empty bottles
Automate de reprise pour bouteilles consignées

(43) Veröffentlichungstag der Anmeldung: 25.03.2015
(73) Patentinhaber: Wincor Nixdorf International GmbH, 33106 Paderborn (DE)
(72) Erfinder: Boymann, Simon, 98693 Ilmenau (DE)

(56) Entgegenhaltungen:
- EP-A1- 2 538 394
- WO-A1-98/02256
- WO-A1-2005/069233
- DE-A1- 10 063 368
- DE-A1-102011 109 392
- US-A- 5 161 661

## Beschreibung

Die Erfindung betrifft einen Rückgabeautomaten für Gebinde nach dem Oberbegriff des Anspruchs 1 sowie ein Verfahren zum Betreiben eines Rückgabeautomaten.

Ein derartiger Rückgabeautomat für Gebinde umfasst eine Annahmeeinrichtung zum Annehmen eines im Rahmen eines Eingabevorganges in den Rückgabeautomat eingegebenen, ein Erkennungszeichen aufweisenden Gebindes und eine Ausleseausrichtung zum Erfassen des dem Gebinde zugeordneten Erkennungszeichens in einem Erkennungsbereich.

Ein solcher Rückgabeautomat kann beispielsweise dazu dienen, Leergut in Form von Pfandflaschen oder anderen mit Pfand behafteten Behältern gegen die Rückzahlung eines entsprechenden Pfandwerts anzunehmen. Ein Verbraucher wirft hierbei Leergut in eine geeignete Einwurföffnung der Annahmeeinrichtung ein. Ein eingeworfenes Gebinde gelangt auf diese Weise auf eine Ablageeinrichtung, die geeignete Transportmittel aufweisen kann, um das Gebinde in einen Erkennungsbereich einer Ausleseeinrichtung zu transportieren. Die Ausleseeinrichtung erkennt ein auf dem Gebinde angebrachtes Erkennungszeichen, beispielsweise ein (DPG-)Pfandlogo und verifiziert auf diese Weise, dass es sich bei dem eingeworfenen Gebinde um ein rücknahmefähiges Gebinde, auf das Pfand auszuzahlen ist, handelt. Die Ausleseeinrichtung kann hierbei auch dazu dienen, die Art des Gebindes zu bestimmen, um einen auszuzahlenden Pfandwert zu bestimmen, der sich abhängig von der Art des Gebindes, beispielsweise für Glasflaschen und PET-Flaschen, unterscheiden kann. Ergibt die Prüfung der Ausleseeinrichtung, dass es sich bei dem eingeworfenen Gebinde um ein rücknahmefähiges Gebinde handelt, so wird das Gebinde weitertransportiert und beispielsweise hin zu einer Lagereinrichtung befördert, in der das Gebinde zur weiteren Verarbeitung aufbewahrt wird.

Die Verifikation eines Gebindes erfolgt bei heutigen Rückgabeautomaten anhand des an einem Gebinde angebrachten Erkennungszeichens, beispielsweise eines Pfandlogos. Wird das Erkennungszeichen erkannt, wird ein eingeworfenes Gebinde verifiziert.

Obwohl das bisherige Vorgehen grundsätzlich eine zuverlässige Unterscheidung von Gebinden, die ein anerkanntes Erkennungszeichen aufweisen, und anderen Gebinden, die kein solches Erkennungszeichen aufweisen, ermöglicht, besteht bei herkömmlichen Rückgabeautomaten gegebenenfalls ein Spielraum für eine Manipulation. So ist denkbar, dass ein in betrügerischer Absicht Handelnder beispielsweise über einen dünnen Draht ein Ausleseeinrichtung eines Rückgabeautomaten anordnet, so dass die Ausleseeinrichtung beim Eingeben eines Gebindes unabhängig von der Art des Gebindes und unabhängig von einem auf dem Gebinde angebrachten Erkennungszeichen anhand des stationär in dem Erkennungsbereich angebrachten Erkennungszeichens eine Verifikation des eingeworfenen Gebindes vornimmt. Auf diese Weise kann Pfand erschlichen werden.

Es besteht ein grundlegendes Bedürfnis nach einem Rückgabeautomaten, bei dem solch eine Manipulationsmöglichkeit ausgeschlossen ist.

Bei einem aus der DE 20 2007 000 846 U1 bekannten Rücknahmesystem erkennt eine Ausleseeinrichtung ein Sicherheitszeichen auf einem Gebinde. Um einer Manipulation durch einen manuellen Eingriff in das Rücknahmesystem vorzubeugen, ist ein optisches Sicherheitsgitter vorgesehen, das einen Eingriff einer Hand in einen Eingaberaum erkennen kann.

Aus der DE 20 2005 020 646 U1 ist ein Pfandrücknahmesystem bekannt, dass eine Ausleseeinrichtung zur Erkennung eines Logos eines Gebindes in einem Auslesebereich aufweist.

Die EP 2 538 394 A1 beschreibt einen Rückgabeautomat, bei dem Betrugsversuche verhindert werden sollen, indem von einer oder zwei Kameras aufgenommene Bilder analysiert werden. Aus solchen Bildern können Merkmale abgeleitet werden, um anhand dieser Merkmale ggf. auf einen Betrugsversuch zu schließen. Bei solchen Merkmalen kann es sich beispielsweise um die zeitabhängige Position eines Objekts handeln. Auf diese Weise wird möglich, beispielsweise festzustellen, ob sich ein Barcode unterschiedlich bewegt als ein eingeführtes Objekt.

Die WO 2005/069233 A1 beschreibt einen Rückgabeautomat, bei dem eine Detektionseinrichtung mit einer Kamera und Lichtquellen vorgesehen ist. Die Lichtquellen können einen Lichtvorhang erzeugen, der zur Detektion eines Betrugsversuchs verwendet werden kann, um beispielsweise zu erkennen, ob ein Objekt wieder aus einem Erfassungsraum herausgezogen wird.

Die DE 100 63 368 A1 betrifft eine Vorrichtung, bei der ein Objekt mittels Scannern erkannt werden soll, wobei Sensoren eine bestimmte Signalfolge ausgeben müssen, damit nicht auf einen Manipulationsversuch geschlossen wird.

Die WO 98/02256 A1 betrifft eine Vorrichtung, bei der bei einem Rückgabeautomat mittels einer Videoanalyseeinrichtung ein richtiges Eingeben eines Objekts, beispielsweise einer Flasche, erkannt werden soll.

Aufgabe der vorliegenden Erfindung ist es, einen Rückgabeautomaten sowie ein Verfahren zum Betreiben eines Rückgabeautomaten zur Verfügung zu stellen, die auf einfache Weise eine zusätzliche Sicherheit vor Manipulationen zur Verfügung stellen.

Diese Aufgabe wird durch einen Gegenstand mit den Merkmalen des Anspruchs 1 gelöst. Demnach ist die Ausleseeinrichtung ausgebildet, eine Abmessung des Erkennungszeichens in dem Erkennungsbereich zu ermitteln und die Abmessung mit mindestens einem Vergleichskriterium zu vergleichen, um anhand des Vergleichs auf einen Manipulationsvorgang zuschließen.

Die vorliegende Erfindung geht von dem Gedanken aus, eine Abmessung eines Erkennungszeichens, das bei einem Eingabevorgang eines Gebindes durch die Ausleseeinrichtung in ihrem Erkennungsbereich erkannt wird, in die Prüfung des Gebindes und dessen Verifikation miteinzubeziehen. Ob es sich bei dem Gebinde um ein rücknahmefähiges Gebinde handelt, auf das Pfand auszuzahlen ist, wird somit nicht allein abhängig davon entschieden, ob ein Erkennungszeichen erkannt worden ist oder nicht, sondern zusätzlich unter Einbeziehung weiterer Kriterien, die sich aus dem Erkennungszeichen ergeben.

So kann beispielsweise die Größe des Erkennungszeichens in die Prüfung mit einbezogen werden. Bei einer Abmessung des Erkennungszeichens kann es sich beispielsweise um die Breite oder Länge, also eine die Größe des Erkennungszeichens anzeigende Abmessung handeln. Erkennt die Ausleseeinrichtung ein Erkennungszeichen, dass im Erkennungsbereich ungewöhnlich klein oder ungewöhnlich groß erscheint, so kann dies darauf hindeuten, dass das Erkennungszeichen nicht auf einem Gebinde angeordnet ist, sondern in sonstiger Weise im Erkennungsbereich die Ausleseeinrichtung platziert worden ist.

Wird ein Erkennungszeichen beispielsweise in betrügerischer Absicht stationär nahe an der Ausleseeinrichtung im Erkennungsbereich platziert, so kann dieses Erkennungszeichen für die Ausleseeinrichtung, die beispielsweise eine geeignete Kamera oder dergleichen aufweisen kann, besonders groß erscheinen. Ist das Erkennungszeichen hingegen weit weg von der Ausleseeinrichtung in dem Erkennungsbereich platziert, so kann das Erkennungszeichen ungewöhnlich klein erscheinen. Wird demgegenüber ein Gebinde mittels beispielsweise einer geeigneten Transporteinrichtung der Annahmeeinrichtung immer in ungefähr gleicher Position in den Erkennungsbereich der Ausleseeinrichtung eingebracht, so sollte auch das Erkennungszeichen zumindest näherungsweise, ggf. abhängig auch von der Größe des Gebindes, von der Ausleseeinrichtung in gleicher Größe bzw. in einem vergleichsweise engen Größenbereich wahrgenommen werden. Ein besonders groß erscheinendes Erkennungszeichen oder ein besonders klein erscheinendes Erkennungszeichen können somit auf einen Manipulationsvorgang hindeuten.

Entsprechend ist die Ausleseeinrichtung ausgebildet, anhand des Vergleichs der ermittelten Abmessung des Erkennungszeichens mit einer erwarteten Abmessung des Erkennungszeichens auf einen Manipulationsvorgang zu schließen. Die erwartete Abmessung des Erkennungszeichens wird anhand einer Abmessung des eingegebenen Gebindes bestimmt. Handelt es sich bei dem Gebinde um ein Flasche mit einem vergleichsweise großen Durchmesser, so wird auch das Erkennungszeichen bei Anordnung des Gebindes im Erkennungsbereich vergleichsweise nahe an der Ausleseeinrichtung zu liegenkommen, so dass das Erkennungszeichen für die Ausleseeinrichtung vergleichsweise groß zu erwarten ist. Weicht die Größe des erkannten Erkennungszeichens von der erwarteten Größe ab, beispielsweise weil das Erkennungszeichen deutlich größer oder deutlich kleiner als erwartet ist, so kann auf einen Manipulationsvorgang erkannt werden, woraufhin geeignete Gegenmaßnahmen, beispielsweise eine Zurückweisung des eingeworfenen Gebindes, ein Abbruch eines Eingabevorgangs und/oder eine Alarmauslösung, veranlasst werden können.

Die Abmessung des eingegebenen Gebindes kann durch die Ausleseeinrichtung selbst ermittelt werden. Ist die Ausleseeinrichtung beispielsweise als Kameraeinrichtung ausgestaltet, so kann anhand der Bildinformationen der Kameraeinrichtung die Größe, beispielsweise der Durchmesser des im Wesentlichen zylindrischen Gebindes, zumindest näherungsweise bestimmt werden. Anhand einer so bestimmten Abmessung des Gebindes kann dann berechnet werden, welche Abmessungen ein auf dem Gebinde angebrachtes Erkennungszeichen ungefähr haben müsste. Weicht ein erkanntes Erkennungszeichen dann in seiner Abmessung von dieser erwarteten Abmessung ab, so kann ein Manipulationsvorgang erkannt werden.

Alternativ oder zusätzlich kann der Rückgabeautomat auch eine gesonderte, weitere Messeinrichtung zur Bestimmung der Abmessung des eingegebenen Gebindes, beispielsweise des Durchmessers einer Flasche aufweisen. Bei einer solchen gesonderten Messeinrichtung kann es sich beispielsweise um eine optische Messeinrichtung unter Verwendung von Licht-, insbesondere Laserstrahlen handeln, die beispielsweise einen optischen Vorhang erzeugt, anhand dessen die Größe eines eingeworfenen Gebindes bestimmt werden kann. Die gesonderte Messeinrichtung übergibt dann einen Wert einer Abmessung an die Ausleseeinrichtung, die diesen Wert in ihre Prüfung miteinbezieht und anhand des Wertes eine erwartete Abmessung eines Erkennungszeichens bestimmt.

Die Ausleseeinrichtung kann auch ausgebildet sein, anhand eines Vergleichs eines ermittelten Orts eines eingegebenen Gebindes mit einem geeigneten Vergleichskriterium auf einen Manipulationsvorgang zu schließen. Hierhinter steht der Gedanke, dass bei einem in betrügerischer Absicht stationär in einem Erkennungsbereich einer Ausleseeinrichtung angebrachten Erkennungszeichen sich der Ort des Erkennungszeichens im Erkennungsbereich über mehrere Eingabevorgänge hinweg nicht ändert. Dies wird in der Regel bei realen Eingabevorgängen, bei denen Gebinde mit daran angebrachten Erkennungszeichen in unterschiedlicher Weise in den Erkennungsbereich der Ausleseeinrichtung eingebracht werden, nicht auftreten, so dass anhand eines stationären Orts des Erkennungszeichens auf einen Manipulationsvorgang geschlossen werden kann.

Entsprechend kann die Ausleseeinrichtung ausgebildet sein, anhand des Vergleichs des ermittelten Orts des Erkennungszeichens im Erkennungsbereich bei einem Eingabevorgang mit einem ermittelten Ort bei einem oder mehreren vorangegangenen Eingabevorgängen auf einen Manipulationsvorgang zu schließen. Ändert sich der Ort über mehrere Eingabevorgänge hinweg nicht, deutet dies darauf hin, dass ein Erkennungszeichen stationär im Erkennungsbereich angebracht ist, was auf einen Manipulationsvorgang schließen lässt.

Ebenso kann anhand eines Vergleichs eines ermittelten Orts eines Erkennungszeichens mit einem erwarteten Ort auf einen Manipulationsvorgang geschlossen werden. Weist eine Annahmeeinrichtung eines Rückgabeautomaten beispielsweise eine geeignete Transporteinrichtung auf, die ein Gebinde immer in eine ungefähr gleiche Position in einen Erkennungsbereich einer Ausleseeinrichtung einfährt, so kann zumindest erwartet werden, dass sich ein Erkennungszeichen innerhalb eines vorbestimmten Bereichs im Erkennungsbereich finden lassen müsste. Wird hingegen festgestellt, dass sich ein ermittelter Ort eines Erkennungszeichens außerhalb eines zulässigen Bereichs befindet, so kann hieraus auf einen Manipulationsvorgang geschlossen werden.

Denkbar und möglich ist auch, den Ort eines Erkennungszeichens als Funktion der Zeit während eines Eingabevorgangs aufzunehmen. Wird beispielsweise der Ort eines Erkennungszeichens beim Einfahren bzw. Ausfahren eines Gebindes in den Erkennungsbereich der Ausleseeinrichtung verfolgt und ist die von einer Transporteinrichtung ausgeführte Transportbewegung bekannt, so kann anhand der zeitlichen Funktion des ermittelten Orts eines Erkennungszeichens im Vergleich zu einer erwarteten zeitlichen Änderung des Orts bestimmt werden, ob ein Manipulationsvorgang vorliegt. Fährt eine Transporteinrichtung beispielsweise ein Gebinde in einen Erkennungsbereich ein und sollte sich dementsprechend der Ort des Erkennungszeichens beim Einfahren ändern, kann dann, wenn die Ausleseeinrichtung einen stationären Ort des Erkennungszeichens, also keine zeitliche Änderung des Orts des Erkennungszeichens, feststellt, auf einen Manipulationsvorgang geschlossen werden, und es können entsprechende Gegenmaßnahmen eingeleitet werden.

Bekannt ist beispielsweise, ein Gebinde in einem Erkennungsbereich einer Ausleseeinrichtung um seine Achse zu drehen, um ein Erkennungszeichen optimal zur Ausleseeinrichtung zu platzieren und eine Verifikation des Erkennungszeichens zu ermöglichen. Auch anhand einer solchen Bewegung kann eine Unterscheidung eines an einem Gebinde angebrachten Erkennungszeichens von einem manipulativ in den Erkennungsbereich der Ausleseeinrichtung eingebrachten Erkennungszeichen erfolgen. Wird ein Gebinde beispielsweise gedreht und sollte es dementsprechend zu einer Änderung des Orts des Erkennungszeichens kommen, wird aber keine Ortsänderung eines erkannten Erkennungszeichens wahrgenommen, so lässt hieraus auf einen Manipulationsvorgang schließen, also auf ein manipulativ im Erkennungsbereich stationär und unabhängig von einem Gebinde angeordnetes Erkennungszeichen.

Die Ausleseeinrichtung weist beispielsweise eine Sensoreinrichtung zur optischen Erfassung von Sensorsignalen in dem Erkennungsbereich auf. Die Sensoreinrichtung kann beispielsweise als Kameraeinrichtung ausgestaltet sein, die ein in den Erkennungsbereich eingebrachtes Gebinde und ein daran angeordnetes Erkennungszeichen bildlich erfasst. Durch geeignete Bildverarbeitung kann mittels einer solchen Ausleseeinrichtung ein Erkennungszeichen verifiziert werden, und es können Abmessungen sowohl des Erkennungszeichens als auch des Gebindes bestimmt werden.

Grundsätzlich dient das hier beschriebene Vorgehen dazu, ein auf einem Gebinde angebrachtes Erkennungszeichen von einem unabhängig von einem Gebinde in dem Erkennungsbereich angeordneten Erkennungszeichen zu unterscheiden. Mittels des hier beschriebenen Vorgehens können insbesondere stationär in einem Erkennungsbereich angeordnete Erkennungszeichen, die in keinem Zusammenhang mit einem eingeworfenen Gebinde stehen, von einem auf einem Gebinde angebrachten Erkennungszeichen unterschieden werden. Die Unterscheidung erfolgt insbesondere anhand der Abmessungen des erkannten Erkennungszeichens vor dem Hintergrund, dass die Abmessungen eines auf einem Gebinde angebrachten Erkennungszeichens abhängig sind von dem Gebinde und einem konkreten Eingabevorgang.

Die Aufgabe wird auch gelöst durch ein Verfahren zum Betreiben eines Rückgabeautomaten für Gebinde, bei dem eine Annahmeeinrichtung ein im Rahmen eines Eingabevorgangs in den Rückgabeautomaten eingegebenen, ein Erkennungszeichen aufweisenden Gebindes annimmt und eine Ausleseeinrichtung das dem Gebinde zugeordnete Erkennungszeichen in einem Erkennungsbereich erfasst. Dabei ist vorgesehen, dass die Ausleseeinrichtung eine Abmessung des Erkennungszeichens des Erkennungszeichens in dem Erkennungsbereich ermittelt und die Abmessung mit mindestens einem Vergleichskriterium vergleicht, um anhand des Vergleichs auf einen Manipulationsvorgang zu schließen. Die Ausleseeinrichtung schließt anhand des Vergleichs der ermittelten Abmessung des Erkennungszeichens mit einer erwarteten Abmessung des Erkennungszeichens auf einen Manipulationsvorgang, wobei die Ausleseeinrichtung die erwartete Abmessung des Erkennungszeichens anhand einer Abmessung des eingegebenen Gebindes bestimmt.

Zu Vorteilen und vorteilhaften Ausgestaltungen soll auf das vorangehend Beschriebene verwiesen werden, das analog auch auf das Verfahren Anwendung findet.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht eines Rückgabeautomaten;
- Fig. 2: eine schematische Ansicht einer Ausleseeinrichtung eines Rückgabeautomaten im Zusammenwirken mit einer Ablageeinrichtung einer Annahmeeinrichtung des Rückgabeautomaten; und
- Fig. 3: eine schematische Ansicht eines durch eine Sensoreinrichtung der Ausleseeinrichtung aufgenommenen Bildes zur Erkennung eines Erkennungszeichens.

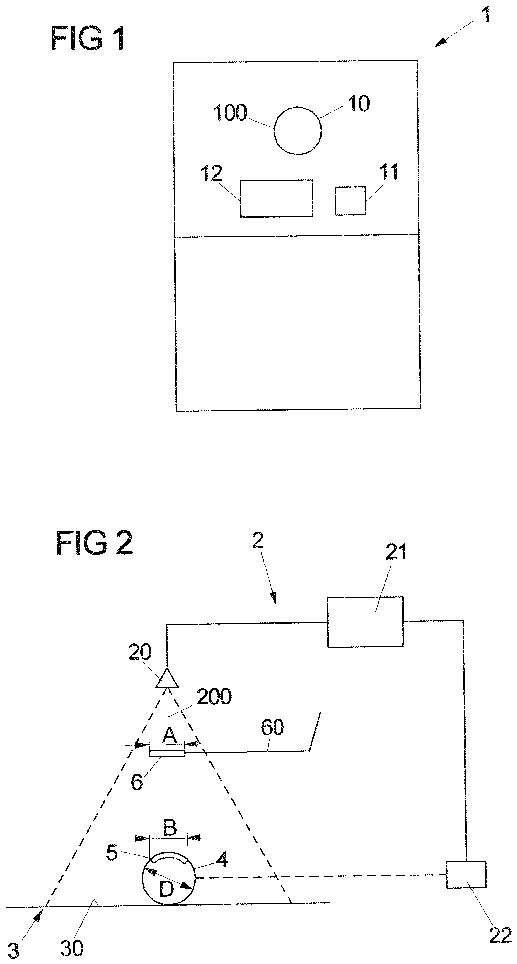

Fig. 1 zeigt in einer schematischen Ansicht einen Rückgabeautomaten 1, der zur Rücknahme von Leergut gegen Auszahlung eines entsprechenden Pfandwerts ausgestaltet ist. Der Rückgabeautomat 1 weist eine Annahmeeinrichtung 10 mit einer Einwurföffnung 100 auf, in die Leergut in Form von Gebinden, beispielsweise Glasflaschen, Plastikflaschen oder Getränkedosen oder dergleichen, eingegeben werden können. Über eine Ausgabeeinrichtung 11 kann beispielsweise ein Pfandbon oder Pfandgeld einem Verbraucher retourniert werden. Eine Anzeigevorrichtung 12 mit einem geeigneten Bildschirm kann vorgesehen sein, um einen Pfandwert anzuzeigen, Informationen oder Instruktionen auszugeben oder sonstige Hinweise darzustellen.

Ein durch eine Einwurföffnung 100 eingeworfenes Gebinde 4 gelangt, wie schematisch in Fig. 2 dargestellt, auf eine Ablageeinrichtung 3, die eine geeignete Transporteinrichtung 30, zum Beispiel in Form eines Förderbands, aufweist, mittels derer das eingeworfene Gebinde 4 von der Einwurföffnung 100 in einen Erkennungsbereich 200 einer Sensoreinrichtung 20 eine Ausleseeinrichtung 2 befördert wird. Die Ausleseeinrichtung 2 dient dazu, ein auf dem Gebinde 4 angeordnetes Erkennungszeichen 5 in Form zum Beispiel eines definierten Pfandlogos (beispielsweise ein Pfandlogo der Deutschen Pfand Gesellschaft (DPG)) zu erkennen und zu verifizieren, um anhand des Erkennungszeichens 5 zu bestimmen, ob es sich bei dem Gebinde 4 um ein rücknahmefähiges Gebinde handelt, auf das ein Pfandwert auszuzahlen ist.

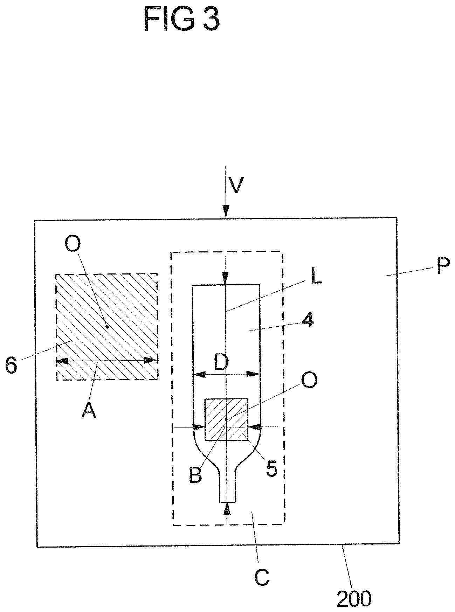

Die Ausleseeinrichtung 2 weist eine Sensoreinrichtung 20 beispielsweise in Form einer geeigneten Kameraeinrichtung auf, die optische Bilder P, wie schematisch in Fig. 3 dargestellt, aus dem Erkennungsbereich 200 aufnimmt. Mit der Sensoreinrichtung 20 ist eine Steuereinrichtung 21 verbunden, die zur Auswertung von optischen Signalen der Sensoreinrichtung 20 dient und eine Prüfung eines erkannten Erkennungszeichens 5 vornimmt. Die Steuereinrichtung 21 dient auch dazu, ein auf einem Gebinde 4 angebrachtes Erkennungszeichen 5 von einem stationär im Erkennungsbereich 200 platzierten Erkennungszeichen 6 zu unterscheiden, um gegebenenfalls einen Manipulationsvorgang zu erkennen und geeignete Gegenmaßnahmen einzuleiten, wie nachfolgend noch beschrieben werden soll.

An die Steuereinrichtung 21 kann beispielsweise auch eine Messeinrichtung 22 angeschlossen sein, die dazu dient, Abmessungen, beispielsweise einen Durchmesser D, eines Gebindes 4 zu erfassen und Informationen hierüber der Steuereinrichtung 21 zuzuleiten, damit diese solche Informationen in einen Prüfungsvorgang mit einbeziehen kann.

Gewöhnlich wird ein Gebinde 4 mit einem daran angebrachten Erkennungszeichen 5 durch die Einwurföffnung 100 auf die Ablageeinrichtung 3 und dessen Transporteinrichtung 30 gegeben, woraufhin gegebenenfalls die Ausleseeinrichtung 2 das Erkennungszeichen 5 erkennt und verifiziert und das Gebinde 4 somit zur Annahme zulässt. Wird die Erkennung und Prüfung des Erkennungszeichens 5 darauf beschränkt, ob überhaupt ein Erkennungszeichen 5 vorhanden ist, besteht grundsätzlich die Möglichkeit für eine Manipulation dadurch, dass ein Erkennungszeichen 6 in betrügerischer Absicht über eine geeignete Halterung 60, beispielsweise einen dünnen Draht oder dergleichen, im Erkennungsbereich 200 der Sensoreinrichtung 20 platziert wird. Wird das Erkennungszeichen 6 erkannt und das Gebinde 4 somit fälschlicherweise verifiziert, kann es gegebenenfalls ganz unabhängig von der Art eines eingeworfenen Gebindes 4 und der Tatsache, ob an dem Gebinde 4 ein Erkennungszeichen 5 angeordnet ist oder nicht, zu einer Auszahlung eines Pfandgelds kommen.

Um solche Manipulationsvorgänge identifizieren zu können, ist die Ausleseeinrichtung 2 ausgebildet, eine Abmessung A, B eines Erkennungszeichens 5, 6 und/oder einen Ort O (siehe Fig. 3) eines in einem Bild P erkannten Erkennungszeichens 5,6 in die Auswertung mit einzubeziehen. Ergeben sich bei der Abmessung A, B und/oder dem Ort O Ungewöhnlichkeiten, kann dies auf einen Manipulationsvorgang hindeuten, der entsprechend angezeigt werden und ein Auslösen von geeigneten Gegenmaßnahmen bewirken kann.

Ist ein Erkennungszeichen 6 in manipulativer Absicht stationär im Erkennungsbereich 200 der Sensoreinrichtung 20 platziert und ist der Abstand des Erkennungszeichens 6 zur Sensoreinrichtung 20 dabei, wie schematisch in Fig. 2 dargestellt, vergleichsweise gering, so wird, aufgrund des geringen Abstands zwischen der Sensoreinrichtung 20 und des Erkennungszeichens 6, eine Abmessung A, beispielsweise eine Breite oder Tiefe des Erkennungszeichens 6, ungewöhnlich groß erscheinen. Wird beispielsweise anhand des Durchmessers D eines eingeworfenes Gebindes 4 eine erwartete Abmessung B, die ein auf dem Gebinde 4 angebrachtes Erkennungszeichen 5 näherungsweise aufweisen müsste, bestimmt, wird die ermittelte Abmessung A des erkannten Erkennungszeichens 6 mit der erwarteten Abmessung B verglichen und kommt es zwischen der ermittelten Abmessung A und der erwarteten Abmessung B zu Unstimmigkeiten, kann dies auf einen Manipulationsvorgang hindeuten, der entsprechend angezeigt werden und entsprechende Gegenmaßnahmen auslösen kann.

Eine Abmessung, beispielsweise der Durchmesser D oder eine Länge L (siehe Fig. 3) eines Gebindes 4, kann von der Ausleseeinrichtung 2 selbst ermittelt werden, indem mittels geeigneter Bildverarbeitung in einem aufgenommenen Bild P, wie dies in Fig. 3 dargestellt ist, die gewünschte Abmessung D, L bestimmt wird. Anhand dieser Abmessung D, L des eingeworfenen Gebindes 4 kann dann eine erwartete Abmessung B, beispielsweise die erwartete Breite eines auf dem Gebinde 4 angebrachten Erkennungszeichens 5 bestimmt werden (weist das Gebinde 4 beispielsweise einen vergleichsweise großen Durchmesser D auf, so sollte das Erkennungszeichen 5 des Gebindes 4 vergleichsweise nahe an der Sensoreinrichtung 20 zu liegen kommen; anhand des Durchmessers D kann näherungsweise auf den Abstand zwischen dem Erkennungszeichen 5 und der Sensoreinrichtung 20 geschlossen werden, und bei normierter Realgröße des Erkennungszeichens 5 kann auf die erwartete Abmessung B, so wie sie von der Sensoreinrichtung 20 wahrgenommen werden sollte, geschlossen werden). Weicht die bestimmte Abmessung A eines Erkennungszeichens 6 im Bild P der Sensoreinrichtung 20 von der erwarteten Abmessung B ab (liegt sie beispielsweise außerhalb eines Toleranzbereichs um die erwartete Abmessung B), so kann auf einen Manipulationsvorgang geschlossen werden.

Eine Abmessung B, L des Gebindes 4 kann auch über die gesonderte Messeinrichtung 22, beispielsweise eine optische Messeinrichtung oder dergleichen, gemessen werden. In diesem Fall stellt die Messeinrichtung 22 der Steuereinrichtung 21 der Ausleseeinrichtung 2 geeignete Informationen zur Verfügung, die die Steuereinrichtung 21 in ihre Prüfung mit einbezieht.

Zusätzlich oder alternativ kann auch ein Ort O eines erkannten Erkennungszeichens 6 in die Prüfung mit einbezogen werden.

Liegt ein Ort O, der beispielsweise als geometrischer Schwerpunkt eines Erkennungszeichens 6 im Bild P der Sensoreinrichtung 20 bestimmt werden kann, beispielsweise außerhalb eines Bereichs C, in dem der Ort O des Erkennungszeichens 5, wenn es auf einem Gebinde 4 angebracht ist, an sich zu erwarten wäre, so kann auf einen Manipulationsvorgang geschlossen werden.

Denkbar ist auch, den Ort O von mehreren aufeinander folgenden Eingabevorgängen zu vergleichen. Ändert sich der Ort O bei mehreren aufeinander folgenden Eingabevorgängen nicht, deutet dies daraufhin, dass ein Erkennungszeichen 6 stationär im Erkennungsbereich 200 der Ausleseeinrichtung 2 angeordnet ist, was auf einen Manipulationsvorgang hindeutet.

Denkbar ist auch, den Ort O eines Erkennungszeichens 5, 6 bei einem Eingabevorgang zeitlich zu verfolgen, indem beispielsweise bei einem Eingabevorgang, bei dem ein Gebinde 4 in eine Bewegungsrichtung V in den Erkennungsbereich 200 der Sensoreinrichtung 20 eingefahren wird, mehrere Bilder P aufgenommen werden. Ändert sich hierbei der Ort O des durch die Ausleseeinrichtung 2 in den Bildern P erkannten Erkennungszeichens 5 entsprechend der bekannten, durch die Transporteinrichtung 30 der Ablageeinrichtung 3 vorgegebenen Bewegung des Gebindes 4, deutet dies daraufhin, dass das Erkennungszeichen 5 auf dem Gebinde 4 angeordnet ist. Bleibt hingegen beim Einfahren der Ort O des erkannten Erkennungszeichens 6 stationär, deutet dies daraufhin, dass das Erkennungszeichen 6 manipulativ in den Erkennungsbereich 200 eingebracht worden ist.

Denkbar ist in diesem Zusammenhang auch, beispielsweise das Gebinde 4 in dem in Fig. 3 dargestellten Zustand unter Verwendung der Transporteinrichtung 30 um seine Achse zu drehen, um auf diese Weise bewusst den Ort O des auf dem Gebinde 4 angebrachten Erkennungszeichens 5 zu verändern. Wird dabei festgestellt, dass es zu keiner Änderung des Ortes O des erkannten Erkennungszeichens 6 kommt, so lässt sich hierauf auf einen Manipulationsvorgang schließen.

Grundsätzlich sind unterschiedliche Gegenmaßnahmen bei Erkennung eines Manipulationsvorgangs denkbar. Beispielsweise kann die Auszahlung eines Pfandgelds für ein eingeworfenes Gebinde 4 verweigert werden. Oder ein Eingabevorgang kann abgebrochen und weitere Eingabevorgänge können unterbunden werden. Oder es kann ein Alarm, beispielsweise ein akustischer Alarm oder eine Alarmierung von Sicherheitspersonal über eine geeignete Kommunikationseinrichtung oder dergleichen, ausgelöst werden.

Der der Erfindung zugrunde liegende Gedanke ist nicht auf die vorangehend geschilderten Ausführungsbeispiele beschränkt.

Grundsätzlich ist das beschriebene Vorgehen für ganz unterschiedliche Arten von Gebinden, beispielsweise Glasflaschen, Plastikflaschen oder ganz andere Container, die ein Erkennungszeichen, beispielsweise ein Pfandlogo, aufweisen, geeignet.

Die Sensoreinrichtung der Ausleseeinrichtung ist nicht notwendigerweise als Kameraeinrichtung auszugestalten. Denkbar sind auch andere, beispielsweise optische Einrichtungen, die ein Erkennen eines Erkennungszeichens ermöglichen.

### Bezugszeichenliste

- 1: Rückgabeautomat
- 10: Annahmeeinrichtung
- 100: Einwurföffnung
- 11: Ausgabeeinrichtung
- 12: Anzeigevorrichtung
- 2: Ausleseeinrichtung
- 20: Sensoreinrichtung
- 200: Erkennungsbereich
- 21: Steuereinrichtung
- 22: Messeinrichtung
- 3: Ablageeinrichtung
- 30: Transporteinrichtung
- 4: Gebinde
- 5, 6: Erkennungszeichen
- 60: Halterung
- A, B: Abmessung
- C: Bereich
- D: Abmessung (Durchmesser)
- L: Abmessung (Länge)
- O: Ort
- P: Bild
- V: Bewegungsrichtung

## Patentansprüche

1. Rückgabeautomat (1) für Gebinde (4), mit
- einer Annahmeeinrichtung (10) zum Annehmen eines im Rahmen eines Eingabevorgangs in den Rückgabeautomaten (1) eingegebenen, ein Erkennungszeichen (5) aufweisenden Gebindes (4) und
- einer Ausleseeinrichtung (2) zum Erfassen des dem Gebinde (4) zugeordneten Erkennungszeichens (5) in einem Erkennungsbereich (200),
wobei die Ausleseeinrichtung (2) ausgebildet ist, eine Abmessung (A, B) des Erkennungszeichens (5, 6) in dem Erkennungsbereich (200) zu ermitteln und die Abmessung (A, B) mit mindestens einem Vergleichskriterium zu vergleichen,
**dadurch gekennzeichnet,**
**dass** die Ausleseeinrichtung (2) ausgebildet ist, anhand des Vergleichs der ermittelten Abmessung (A, B) des Erkennungszeichens (5, 6) mit einer erwarteten Abmessung des Erkennungszeichens (5, 6) auf einen Manipulationsvorgang zu schließen, wobei die Ausleseeinrichtung (2) ausgebildet ist, die erwartete Abmessung des Erkennungszeichens (5, 6) anhand einer Abmessung (D, L) des eingegebenen Gebindes (4) zu bestimmen.

2. Rückgabeautomat (1) nach Anspruch 1, **dadurch gekennzeichnet, dass** die Ausleseeinrichtung (2) ausgebildet ist, eine Abmessung (D, L) des eingegebenen Gebindes (4) zu ermitteln, um anhand der Abmessung (D, L) des eingegebenen Gebindes (4) die erwartete Abmessung des Erkennungszeichens (5, 6) zu bestimmen.

3. Rückgabeautomat (1) nach Anspruch 1 oder 2, **dadurch gekennzeichnet, dass** der Rückgabeautomat (1) eine Messeinrichtung (22) zum Messen der Abmessung (D, L) des eingegebenen Gebindes (4) aufweist.

4. Rückgabeautomat (1) nach einem der vorangehenden Ansprüche, **dadurch gekennzeichnet, dass** die Ausleseeinrichtung (2) ausgebildet ist, einen Ort (O) des Erkennungszeichens (5, 6) in dem Erkennungsbereich (200) zu ermitteln und den Ort (O) mit mindestens einem Vergleichskriterium zu vergleichen.

5. Rückgabeautomat (1) nach Anspruch 4, **dadurch gekennzeichnet, dass** die Ausleseeinrichtung (2) ausgebildet ist, anhand des Vergleichs des ermittelten Orts (O) des Erkennungszeichens (5, 6) bei einem Eingabevorgang mit einem ermittelten Ort (O) bei einem oder mehreren vorangegangenen Eingabevorgängen auf einen Manipulationsvorgang zu schließen.

6. Rückgabeautomat (1) nach Anspruch 4 oder 5, **dadurch gekennzeichnet, dass** die Ausleseeinrichtung (2) ausgebildet ist, anhand des Vergleichs des ermittelten Orts (O) des Erkennungszeichens (5, 6) mit einem erwarteten Ort (O) auf einen Manipulationsvorgang zu schließen.

7. Rückgabeautomat (1) nach einem der Ansprüche 4 bis 6, **dadurch gekennzeichnet, dass** die Ausleseeinrichtung (2) ausgebildet ist, den Ort (O) des Erkennungszeichens (5, 6) über die Zeit zu ermitteln, um anhand eines Vergleichs des ermittelten Orts (O) als Funktion der Zeit mit einem erwarteten zeitlichen Verlauf des Orts (O) des Erkennungszeichens (5, 6) auf einen Manipulationsvorgang zu schließen.

8. Rückgabeautomat (1) nach einem der vorangehenden Ansprüche, **dadurch gekennzeichnet, dass** die Ausleseeinrichtung (2) eine Sensoreinrichtung (20) zur optischen Erfassung von Sensorsignalen in dem Erkennungsbereich (200) aufweist.

9. Rückgabeautomat (1) nach einem der vorangehenden Ansprüche, **dadurch gekennzeichnet, dass** die Ausleseeinrichtung (2) ausgebildet ist, ein auf einem Gebinde (4) angebrachtes Erkennungszeichen (5) von einem unabhängig von einem Gebinde (4) in dem Erkennungsbereich (200) angeordneten Erkennungszeichen (6) zu unterscheiden.

10. Verfahren zum Betreiben eines Rückgabeautomaten (1) für Gebinde (4), bei dem
- eine Annahmeeinrichtung (10) ein im Rahmen eines Eingabevorgangs in den Rückgabeautomaten (1) eingegebenes, ein Erkennungszeichen (5) aufweisendes Gebinde (4) annimmt und
- eine Ausleseeinrichtung (2) das dem Gebinde (4) zugeordnete Erkennungszeichen (5) in einem Erkennungsbereich (200) erfasst,
wobei die Ausleseeinrichtung (2) eine Abmessung (A, B) des Erkennungszeichens (5, 6) in dem Erkennungsbereich (200) ermittelt und die Abmessung (A, B) mit mindestens einem Vergleichskriterium vergleicht,
**dadurch gekennzeichnet,**
**dass** die Ausleseeinrichtung (2) anhand des Vergleichs der ermittelten Abmessung (A, B) des Erkennungszeichens (5, 6) mit einer erwarteten Abmessung des Erkennungszeichens (5, 6) auf einen Manipulationsvorgang schließt, wobei die Ausleseeinrichtung (2) die erwartete Abmessung des Erkennungszeichens (5, 6) anhand einer Abmessung (D, L) des eingegebenen Gebindes (4) bestimmt.

## Claims

1. Return machine (1) for containers (4), having
- an accepting device (10) for accepting a container (4), which is introduced into the return machine (1) as part of an introduction operation and which has an identification mark (5), and
- a reading device (2) for capturing the identification mark (5), which is assigned to the container (4), in a detection region (200),
wherein the reading device (2) is embodied to ascertain a dimension (A, B) of the identification mark (5, 6) in the detection region (200) and to compare the dimension (A, B) with at least one comparison criterion,
**characterized**
**in that** the reading device (2) is embodied to deduce a manipulation operation on the basis of the comparison of the ascertained dimension (A, B) of the identification mark (5, 6) with an expected dimension of the identification mark (5, 6), wherein the reading device (2) is embodied to determine the expected dimension of the identification mark (5, 6) on the basis of a dimension (D, L) of the introduced container (4).

2. Return machine (1) according to Claim 1, **characterized in that** the reading device (2) is embodied to ascertain a dimension (D, L) of the introduced container (4) in order to determine the expected dimension of the identification mark (5, 6) on the basis of the dimension (D, L) of the introduced container (4).

3. Return machine (1) according to Claim 1 or 2, **characterized in that** the return machine (1) has a measurement device (22) for measuring the dimension (D, L) of the introduced container (4).

4. Return machine (1) according to one of the preceding claims, **characterized in that** the reading device (2) is embodied to ascertain a location (O) of the identification mark (5, 6) in the detection region (200) and to compare the location (O) with at least one comparison criterion.

5. Return machine (1) according to Claim 4, **characterized in that** the reading device (2) is embodied to deduce a manipulation operation on the basis of the comparison of the ascertained location (O) of the identification mark (5, 6) during an introduction operation with an ascertained location (O) in one or more preceding introduction operations.

6. Return machine (1) according to Claim 4 or 5, **characterized in that** the reading device (2) is embodied to deduce a manipulation operation on the basis of the comparison of the ascertained location (O) of the identification mark (5, 6) with an expected location (O).

7. Return machine (1) according to one of Claims 4 to 6, **characterized in that** the reading device (2) is embodied to ascertain the location (O) of the identification mark (5, 6) over time in order to deduce a manipulation operation on the basis of a comparison of the ascertained location (O) as a function of time with an expected temporal profile of the location (O) of the identification mark (5, 6).

8. Return machine (1) according to one of the preceding claims, **characterized in that** the reading device (2) has a sensor device (20) for optically capturing sensor signals in the detection region (200).

9. Return machine (1) according to one of the preceding claims, **characterized in that** the reading device (2) is embodied to differentiate an identification mark (5) provided on a container (4) from an identification mark (6) arranged in the detection region (200) independently from a container (4).

10. Method for operating a return machine (1) for containers (4), in which
- an accepting device (10) accepts a container (4), which is introduced into the return machine (1) as part of an introduction operation and which has an identification mark (5), and
- a reading device (2) captures the identification mark (5), which is assigned to the container (4), in a detection region (200),
wherein the reading device (2) ascertains a dimension (A, B) of the identification mark (5, 6) in the detection region (200) and compares the dimension (A, B) with at least one comparison criterion,
**characterized**
**in that** the reading device (2) deduces a manipulation operation on the basis of the comparison of the ascertained dimension (A, B) of the identification mark (5, 6) with an expected dimension of the identification mark (5, 6), wherein the reading device (2) determines the expected dimension of the identification mark (5, 6) on the basis of a dimension (D, L) of the introduced container (4).

## Revendications

1. Automate de reprise (1) pour récipients (4), comprenant
- un dispositif d'acceptation (10) destiné à accepter un récipient (4) introduit dans l'automate de reprise (1) dans le cadre d'une opération d'introduction et présentant un symbole de reconnaissance (5) et
- un dispositif de lecture (2) destiné à acquérir le symbole de reconnaissance (5) associé au récipient (4) dans une zone de reconnaissance (200),
le dispositif de lecture (2) étant configuré pour identifier une dimension (A, B) du symbole de reconnaissance (5, 6) dans la zone de reconnaissance (200) et comparer la dimension (A, B) avec au moins un critère de comparaison,
**caractérisé en ce**
**que** le dispositif de lecture (2) est configuré pour déduire une opération de manipulation, au moyen de la comparaison de la dimension (A, B) identifiée du symbole de reconnaissance (5, 6) avec une dimension attendue du symbole de reconnaissance (5, 6), le dispositif de lecture (2) étant configuré pour déterminer la dimension attendue du symbole de reconnaissance (5, 6) au moyen d'une dimension (D, L) du récipient (4) introduit.

2. Automate de reprise (1) selon la revendication 1, **caractérisé en ce que** le dispositif de lecture (2) est configuré pour identifier une dimension (D, L) du récipient (4) introduit afin de déterminer la dimension attendue du symbole de reconnaissance (5, 6) au moyen de la dimension (D, L) du récipient (4) introduit.

3. Automate de reprise (1) selon la revendication 1 ou 2, **caractérisé en ce que** l'automate de reprise (1) possède un dispositif de mesure (22) destiné à mesurer la dimension (D, L) du récipient (4) introduit.

4. Automate de reprise (1) selon l'une des revendications précédentes, **caractérisé en ce que** le dispositif de lecture (2) est configuré pour identifier un emplacement (O) du symbole de reconnaissance (5, 6) dans la zone de reconnaissance (200) et pour comparer l'emplacement (O) avec au moins un critère de comparaison.

5. Automate de reprise (1) selon la revendication 4, **caractérisé en ce que** le dispositif de lecture (2) est configuré pour, à l'aide de la comparaison de l'emplacement (O) identifié du symbole de reconnaissance (5, 6) lors d'une opération d'introduction avec un emplacement (O) identifié lors d'une ou de plusieurs opérations d'introduction précédentes, déduire une opération de manipulation.

6. Automate de reprise (1) selon la revendication 4 ou 5, **caractérisé en ce que** le dispositif de lecture (2) est configuré pour déduire une opération de manipulation à l'aide de la comparaison de l'emplacement (O) identifié du symbole de reconnaissance (5, 6) avec un emplacement (O) attendu.

7. Automate de reprise (1) selon l'une des revendications 4 à 6, **caractérisé en ce que** le dispositif de lecture (2) est configuré pour identifier l'emplacement (O) du symbole de reconnaissance (5, 6) dans le temps afin de déduire une opération de manipulation à l'aide d'une comparaison de l'emplacement (O) identifié en fonction du temps avec une courbe dans le temps attendue de l'emplacement (O) du symbole de reconnaissance (5, 6).

8. Automate de reprise (1) selon l'une des revendications précédentes, **caractérisé en ce que** le dispositif de lecture (2) possède un dispositif de détection (20) destiné à l'acquisition optique de signaux de capteur dans la zone de reconnaissance (200).

9. Automate de reprise (1) selon l'une des revendications précédentes, **caractérisé en ce que** le dispositif de lecture (2) est configuré pour différencier un symbole de reconnaissance (5) appliqué sur un récipient (4) d'un symbole de reconnaissance (6) disposé dans la zone de reconnaissance (200) indépendamment d'un récipient (4).

10. Procédé pour faire fonctionner un automate de reprise (1) pour récipients (4), avec lequel
- un dispositif d'acceptation (10) accepte un récipient (4) introduit dans l'automate de reprise (1) dans le cadre d'une opération d'introduction et présentant un symbole de reconnaissance (5) et
- un dispositif de lecture (2) acquiert le symbole de reconnaissance (5) associé au récipient (4) dans une zone de reconnaissance (200),
le dispositif de lecture (2) identifiant une dimension (A, B) du symbole de reconnaissance (5, 6) dans la zone de reconnaissance (200) et comparant la dimension (A, B) avec au moins un critère de comparaison,
**caractérisé en ce**
**que** le dispositif de lecture (2) déduit une opération de manipulation, au moyen de la comparaison de la dimension (A, B) identifiée du symbole de reconnaissance (5, 6) avec une dimension attendue du symbole de reconnaissance (5, 6), le dispositif de lecture (2) déterminant la dimension attendue du symbole de reconnaissance (5, 6) au moyen d'une dimension (D, L) du récipient (4) introduit.
